Europäisches Patentamt

European Patent Office

Office européen des brevets

(11) Veröffentlichungsnummer: **0 200 182**
**B1**

(12) **EUROPÄISCHE PATENTSCHRIFT**

(45) Veröffentlichungstag der Patentschrift: **26.09.90**

(51) Int. Cl.⁵: **F 16 K 11/07**

(21) Anmeldenummer: **86105787.5**

(22) Anmeldetag: **26.04.86**

(54) **Hydraulisches Steuerventil in Kolben-Schieber-Bauweise.**

(30) Priorität: **30.04.85 DE 3515563**

(43) Veröffentlichungstag der Anmeldung:
**05.11.86 Patentblatt 86/45**

(45) Bekanntmachung des Hinweises auf die
Patenterteilung:
**26.09.90 Patentblatt 90/39**

(84) Benannte Vertragsstaaten:
**AT BE CH DE FR GB IT LI LU NL SE**

(56) Entgegenhaltungen:
**DE-A-2 717 384**
**DE-A-3 129 594**
**DE-A-3 205 860**
**FR-A- 990 435**
**FR-A-1 463 559**
**US-A-3 882 883**

(73) Patentinhaber: **Parker Hannifin NMF GmbH**
**Geestemünder Strasse 42**
**D-5000 Köln 60 (DE)**

(72) Erfinder: **Scheffel, Gerd, Dr. Dipl.-Ing.**
**Danzigerstrasse 53**
**D-4052 Korschenbroich 1 (DE)**

(74) Vertreter: **Müller, Karl-Ernst, Dr. et al**
**Patentanwälte Becker & Müller**
**Eisenhüttenstrasse 2**
**D-4030 Ratingen 1 (DE)**

Courier Press, Leamington Spa, England.

## Beschreibung

Die Erfindung betrifft ein hydraulisches Steuerventil in Kolben-Schieber-Bauweise mit einem in einem Gehäuse längsverschiebbar angeordneten zylindrischen Steuerkolben, der mittels umlaufender Ausnehmungen und dadurch um einen Kolbenkern an Kolbenbunden gebildeter Steuerflächen wenigstens einen das Gehäuse durchfließenden Flüssigkeitsstrom regelt, wobei durch die Ausnehmungen zwischen den Kolbenbunden bei entsprechender Längsverschiebung des Steuerkolbens gehäuseseitig zwischen Stegen umlaufende Steuerkammern gekoppelt werden, wobei die Bunde des zylindrischen Steuerkolbens auf ihrer parallel zu den Gehäusestegen ausgebildeten Oberfläche umlaufende und die Steuerkammern progressiv freigebende Steuerkanten aufweisen.

Gattungsgemäße Steuerventile sind durch die DE-A-2717384 sowie die DE-A-3205860 bekanntgeworden. Bei beiden Steuerventilen handelt es sich um sogenannte Stetigventile, bei welchen eine Feinsteuerbarkeit des Ventils dadurch gegeben ist, daß die Steuerkanten dreiecksförmige Ausnehmungen aufweisen, die bezogen auf den Querschnitt der Steuerflächen zumeist die räumliche Form eines Halbkegels aufweisen. Mit derartigen Kolbengeometrien wird erreicht, daß bei dem Öffnungshub des Ventilkolbens dessen Steuerkanten beginnend von der Spitze der dreiecksförmigen Aussparung her die im Gehäuse ringartig um den Kolben angeordneten Steuerkammern progressiv freigeben, wodurch im Bereich kleiner Durchflußströme eine Feinsteuerung des Ventils mit der gewünschten Genauigkeit gegeben ist. Weiterhin soll mit dem bekannten Verlauf der Steuerkanten erreicht werden, daß es nicht wie bei geradlinig im sogenannten Nullschnitt mit den Steuerkammern zusammenwirkenden Steuerkanten zu einem Abriß der Flüssigkeitsströmung an den Steuerkanten kommt, womit ein Kraftübergewicht in Fließrichtung des Mediums einhergeht, welches im Gegensatz zur gewünschten Feinsteuerung bestrebt ist, die Öffnungsbewegung des Kolbens schlagartig voranzutreiben.

Mit der Gestaltung der Steuerkanten als dreieckförmige Ausnehmungen bzw. der Steuerflächen als halbkegelförmige Aussparungen ist der Nachteil verbunden, daß sich zwar im Dreiecksbereich der Steuerkanten eine Feinsteuerung des Ventils verwirklichen läßt, daß sich jedoch bei Herausfahren des Steuerkolbens aus diesem Bereich mit Erreichen der vollen Öffnungsstellung der Volumenstrom des Mediums schlagartig erhöht, wodurch der unerwünschte plötzliche Anstieg der Strömungskräfte eintritt. Als weiterer Nachteil der Gestaltung der Steuerkanten ist deren aufwendige Herstellung anzusehen. Zunächst erfordert die Gestalt der Steuerkanten bzw. Aussparungen bezogen auf die Steuerflächen einen hohen Fräsaufwand, da von der Genauigkeit der Ausbildung der Steuerkanten bzw. Steuerflächen die Öffnungshub-Charakteristik des Steuerventils maßgeblich abhängt. Da es sich bei dem Kolben um ein gehärtetes Bauteil handelt, trägt der sich an das Ausfräsen des Steuerkanten- bzw. Steuerflächenverlaufs anschließende Härtungsvorgang wieder diesbezügliche Ungenauigkeiten in das Werkstück hinein.

Der Erfindung liegt daher die Aufgabe zugrunde, ein gattungsgemäßes Ventil derart zu verbessern, daß bei guter Feinsteuerbarkeit des Ventils sprunghafte Änderungen der Strömungskräfte vermieden sind.

Die Lösung dieser Aufgabe ergibt sich aus dem Hauptanspruch, vorteilhafte Ausgestaltungen und Weiterbildungen der Erfindung sind in den Unteransprüchen angegeben.

Nach der Erfindung ist vorgeschlagen, daß das Verlaufsbild der in Umfangsrichtung der Kolbenbunde abgewickelten, die gehäuseseitigen Steuerkammern bei der Längsverschiebung des Steuerkolbens freigebenden bzw. verschließenden Steuerkanten des Steuerkolbens bei einem sich von der den Querschnitt der Steuerkammern verschließenden Stellung bis zum Erreichen von deren vollständiger Freigabe symmetrisch erweiternden Verlauf dem Verlaufsbild einer halbperiodischen Sinusfunktion entspricht und keinen geradlinig und rechtwinklig zur Kolbenlängsachse verlaufenden Abschnitt aufweist.

Aus der FR-A-1 463 559 ist ein Kolben-Schieber-Ventil bekannt, dessen in Umfangsrichtung des Kolbens abgewickelter Verlauf der Steuerkanten keinen geradlinig und rechtwinklig zur Längsachse des Kolbens verlaufenden Abschnitt aufweist. Der Kolben weist hierzu um seinen Umfang in Form eines Sechsecks angeordnete, schräg zum Kolbenkern gestellte Steuerflächen auf, daß sich eine Kolbenbauform mit Fase ergibt, welcher die Steuerkanten nicht auf der Oberfläc̈ des zylindrischen Steuerkolbens festliegen, sc dern mit der Verschiebung des Steuerkolbens über die schräg gestellten Steuerflächen wandern. Das bekannte Ventil weist zwar auch schon eine gute Feinsteuerbarkeit auf, jedoch treten je nach der Stellung des Steuerkolbens hohe Strömungskräfte und damit Betätigungskräfte auf. Ferner ergibt sich beim Herausfahren des Steuerkolbens aus dem Fasenbereich in die "Offen"-Stellung des Ventils ein sprunghafter Anstieg der Strömungskräfte, der mit der Erfindung vermieden sein soll.

Weiterhin ist aus der DE-A-3129594 ein Ventil mit einzelnen Anschlußbohrungen bekannt, bei welchem durch Drehung des Kolbenschiebers um seine Längsachse bei gleichzeitiger Schrägstellung der Steuerfläche eine vergleichbare Kennlinie der Strömungskräfte erreicht ist, jedoch ist eine derartige Lösung bei gattungsgemäßen Ventilen mit umlaufenden Steuerkammern wegen deren ungleichmäßiger Kopplung ausgeschlossen.

Mit dem erfindungsgemäßen wellenförmigen Verlauf der Steuerkanten an den Bunden des Steuerkolbens ist der Vorteil verbunden, daß der Anstieg des Fließquerschnitts für das Medium bis zur vollständigen Freigabe des Öffnungsquerschnitts der Steuerkammern progressiv erfolgt, ohne daß eine plötzliche Richtungsänderung der Steuerkante erfolgt. Dies bedeutet, daß auch die Kennlinie der Strömungskräfte in Abhängigkeit vom Öffnungsquerschnitt einen progressiv-knickfreien Verlauf aufweist, wodurch sichergestellt ist, daß einsprunghafter Anstieg der Strömungskräfte mit den beschriebenen Nachteilen für die Ventilsteuerung sicher vermieden ist.

Bei der erfindungsgemäßen Gestaltung erweitert sich die Steuerkante von der Schließstellung des Kolbens, d. h. der vollständigen Überdeckung der gehäuseseitigen Steuerkammern durch den Kolben, kurvenförmig nach Art einer halb-periodischen Sinuskurve bis zum vollen Öffnungsquerschnitt. Mit einer derartigen Ausbildung der Steuerkanten bzw. der den Verlauf der Steuerkanten folgenden Steuerflächen ist der besondere Vorteil verbunden, daß das Ventil noch steuergenauer ist, indem kleine Hubänderungen zu relativ viel größeren Querschnittsveränderungen im Bereich Steuerkante/gehäuseseitige Steuerkammern führen als beim Stand der Technik.

Ein weiterer Vorteil der erfindungsgemäßen Ausgestaltung ist die einfache Herstellung der Steuerkanten bzw. Steuerflächen, da diese bei der Ausarbeitung der Ausnehmungen aus dem vollen Kolbenquerschnitt durch Abdrehen in einem Arbeits- d. h. Drehvorgang hergestellt werden können. Auch die nachfolgende Oberflächenhärtung des Kolbens mit Steuerflächen und Steuerkanten bringt wegen der fließenden Übergänge keine Ungenauigkeiten ins Spiel.

Weiterhin kann in Umkehrung der Bauteilanpassung vorgesehen sein, daß die Steuerkanten des Kolbens als geradlinig umlaufende Kanten ausgebildet sind, während gleichzeitig die Kanten der Stege zwischen den gehäuseseitigen Steuerräumen in der erfindungsgemäßen Art ausgestaltet sind, so daß sich die gleichen vorteilhaften Wirkungen beim Zusammenspiel von Steuerkanten und Stegen ergibt.

Schließlich ist die Erfindung nicht auf die im angezogenen Stand der Technik beschriebenen Stetig-Ventile beschränkt, sondern sie ist auf alle hydraulischen Ventile in Kolben-Schieber-Bauweise anwendbar, da unabhängig von einem stetigen Verlauf der Öffnungscharakteristik bei allen Ventilen in Kolben-Schieber-Bauweise jede Art von unerwünschten und zu vermeidenden Steuerschlägen infolge eines plötzlichen Anstiegs der Strömungskräfte vermieden ist.

In der Zeichnung ist ein Ausführungsbeispiel der Erfindung wiedergegeben, welches nachstehend beschrieben ist. Es zeigen:

Fig. 1 ein gattungsgemäßes hydraulisches Steuerventil in einer schematischen Darstellung mit geschnittenem Ventilgehäuse und Ventilkolben in Vorderansicht.

Fig. 2 als ausschnittsweise Vergößerung eine Ansicht des Steuerkolbens mit angrenozenden Steuerräumen,

Fig. 3 zwei Steuerkanten in einer Abwicklung längs eines Kolbenbundes.

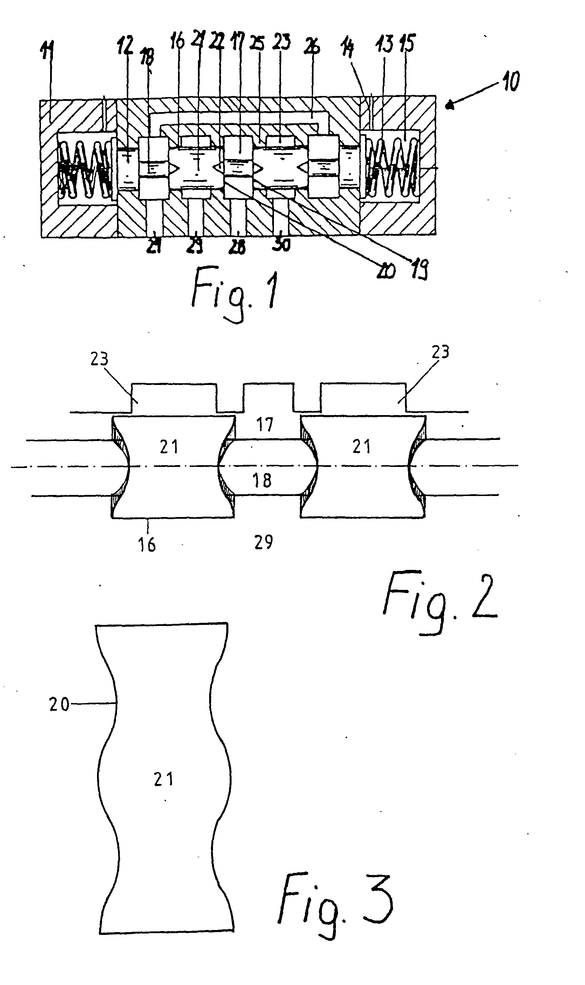

In Figur 1 ist die sogenannte Hauptstufe 10 eines Stetig-Wegeventils mit Richtungssteuerung in Kolben-Schieber-Bauweise dargestellt, welche in ihrem Bewegungsablauf durch eine nicht dargestellte Vorsteuerung ansteuerbar ist. Die Hauptstufe 10 weist ein Gehäuse 11 auf, in dem ein Kolben 12 beweglich angeordnet ist. Der Kolben 12 ist durch zwei sich am Gehäuse 11 abstützende Zentrierfedern 13 in Ruhelage gehalten, wobei an den sich gegenüberliegenden Enden des Kolbens 12 im Gehäuse 11 Kammern 15 zur Aufnahme der Zentrierfedern 13 ausgebildet sind. Die Kammern 15 weisen Bohrungen 14 auf, welche jeweils eine Verbindung zu der nicht dargestellten hydraulischen Vorsteuerung herstellen.

In dem Gehäuse 11 der Hauptstufe 10 ist eine axiale Führungsbohrung 16 für den Steuerkolben 12 ausgebildet, der in diesem Fall drei mit Abstand zueinander angeordnete umlaufende Ausnehmungen 17 aufweist, so daß sich dazwischen zwei den vollen Kolbenquerschnitt aufweisende Kolbenbunde 21 ergeben. Die Ausnehmungen 17 umfassen ringförmig einen Kolbenkern 18, so daß sich vom Kolbenkern 18 radial abstehende Steuerflächen 19 ergeben, deren äußerer Rand als Steuerkante 20 dichtend an der Innenfläche der axialen Führungsbohrung 16 gleitet. In der in Figur 1 gezeigten, dem Stand der Technik entsprechenden Darstellung weisen die Steuerkanten 20 dreieckförmige Ausnehmungen 22 auf, von denen mehrere mit Abstand zueinander im Verlauf der den Kolbenbund 21 umfahrenden Steuerkante 20 angeordnet sind. Die Aussparungen 22 haben in Richtung auf den Kolbenkern eine halbkegelförmige Gestalt.

Gehäuseseitig ist die Kolbengestaltung 12 umgeben von im Gehäuse 11 ausgebildeten, den Steuerkolben 12 ringförmig umschließenden Steuerräumen 23, welche über Anschlußbohrungen 27 bis 30 mit außerhalb des Ventils liegenden und daher nicht dargestellten Aggregaten wie Tank, Pumpe, Verbraucher verbunden sind. Dabei ist mit 27 der Anschluß zum Tank, mit 28 der Anschluß zur Pumpe und mit 29 und 30 je ein Anschluß zu einem Verbraucher bezeichnet. Zwischen den an der Axialbohrung 16 im Gehäuse 11 ausgesparten Steuerräumen 23 sind Stege 25 angeordnet, welche mit den Steuerkanten 20 des Kolbens 12 bei dessen axialer Bewegung zusammenwirken. Zwecks einer zusätzlichen Versorgung und eines Druckausgleichs sind zwei Steuerkammern 23, ausgehend von der Tankbohrung 27 durch einen Steuerkanal 26 verbunden.

In Figur 2 ist nun die erfindungsgemäße Ausbildung des Steuerkolbens dargestellt, und zwar in Form eines Teilausschnitts des Steuerkolbens 12 mit Kolbenkern IB, zu dem beidseitig abschnittsweise zwei Kolbenbunde 21 mit zwei eingezogenen Steuerflächen 19 gezeigt sind. Die zwischen den Steuerflächen 19 befindliche Ausnehmung 17 hat Verbindung zu einem gehäuseseitigen Steuerraum 23 sowie zu der Anschlußbohrung 29. Anstelle mehrerer Dreieckaussparungen 22 verlaufen nun die Steuerkanten 20 der Kolbenbunde 21 ohne eine plötzliche Richtungsänderung nach Art einer die Breite des Kolbenbundes 21 verjüngenden Sinuskurve.

Der Verlauf der Steuerkante 20 wird deutlicher in Figur 3, in welcher ein Kolbenbund 21 in einer abgewickelten Darstellung gezeigt ist, woraus sich ergibt, daß auf dem Kolbenumfang von 360 Grad die Steuerkante 20 zweimal eine sinusförmige Schwingung von einer halben Periode aufweist.

Das erfindungsgemäße Ventil arbeitet wie folgt:

In der durch die Zentrierfedern 13 herbeigeführten Mittellage des Kolbens 12 im Gehäuse 11 sind die Anschlußbohrungen 27 und 28 für Tank und pumpe offen, indem die zugehörigen Steuerräume 23 mit der zugeordneten Ausnehmung 17 des Kolbens 12 in Verbindung stehen. Das Beaufschlagen einer der beiden Bohrungen 14 mit einem von der Vorsteuerung abgegebenen Steueröldruck führt zu einer axialen Verschiebung des Kolbens 12 entgegen der Kraft der dem Steueröleintritt entgegengesetzten Seite des Kolbens 12 angeordneten Zentrierfeder 13 bis zur Verbindung einer der beiden Verbraucher 29, 30 mit der Pumpenseite 28 bzw. der Verbindung des jeweils anderen Verbrauchers 29, 30 mit der Tankseite 27 (eine richtige größenmäßige Darstellung vorausgesetzt). Beim Öffnen insbesondere der unter Druck stehenden Steuerräume 23 durch eine Axialbewegung des Kolbens 12 beginnt nun ein Überfließen des Mediums an der Stelle der tiefsten Einziehung des Steuerkantenverlaufs 20. Durch die weitere Axialbewegung wird progressiv jeweils immer mehr an Öffnungsquerschnitt freigegeben, so daß ein stetiger Anstieg der Strömungsmenge und damit der wirkenden Strömungskräfte erfolgt. Dieser Vorgang vollzieht sich progressiv bis zum Erreichen des vollen Öffnungsquerschnittes in der in Figur 2 gezeigten Stellung, ohne daß eine abrupte Querschnittsvergrößerung am Kolbenbund erfolgt, so daß ein ebenso abrupter Anstieg der Strömungskräfte vermieden ist.

Es ist einsichtig, daß jede beliebige Art der Gestaltung des Verlaufs der Steuerkanten als zur Erfindung gehörig angesehen werden muß, welche eine plötzliche -Richtungsänderung des Verlaufsder Steuerkanten mit einer abrupten Vergrößerung der Strömungskräfte vermeidet.

Schließlich sind bei dem Ausführungsbeispiel gemäß Figur 2 die Steuerflächen 19 senkrecht zum Kolbenkern 18 angeordnet, so daß sich infolge der Sinus-Kurve der Steuerkante 20 ein Öffnungsquerschnitt des Kolbens 12 bis zu dessen Kolbenkern 18 ergibt. Eine weitere vorteilhafte Feinabstimmung des Ventils ist dadurch möglich, daß die Steuerflächen schräg zum Kolbenkern hin angeordnet werden, und zwar derart, daß sich auch in radialer Richtung eine progressive Freigabe an Strömungsquerschnitt ergibt.

**Patentansprüche**

1. Hydraulisches Steuerventil in Kolben-Schieber-8auweise mit einem in einem Gehäuse (11) längsverschiebbar angeordneten zylindrischen Steuerkolben (12), der mittels umlaufender Ausnehmungen (17) und dadurch um einen Kolbenkern (18) an Kolbenbunden (21) gebildeter Steuerflächen (19) wenigstens einen das Gehäuse (11) durchfließenden Flüssigkeitsstrom regelt, wobei durch die Ausnehmungen (17) zwischen den Kolbenbunden (21) bei entsprechender Längsverschiebung des Steuerkolbens (12) gehäuseseitig zwischen Stegen (25) umlaufende Steuerkammern (23) gekoppelt werden, wobei die Bunde (21) des zylindrischen Steuerkolbens (12) auf ihrer parallel zu den Gehäusestegen (25) ausgebildeten Oberfläche umlaufende und die Steuerkammern (17) progressiv freigebende Steuerkanten (20) aufweisen, dadurch gekennzeichnet, daß das Verlaufsbild der in Umfangsrichtung der Kolbenbunde (21) abgewickelten, die gehäuseseitigen Steuerkammern (23) bei der Längsverschiebung des Steuerkolbens (12) freigebenden bzw. verschließenden Steuerkanten (20) des Steuerkolbens (12) bei einem sich von der den Querschnitt der Steuerkammern (23) verschließenden Stellung bis zum Erreichen von deren vollständiger Freigabe symmetrisch erweiternden Verlauf dem Verlaufsbild einer halb-periodischen Sinusfunktion entspricht und keinen geradlinig und rechtwinklig zur Kolbenlängsachse verlaufenden Abschnitt aufweist.

2. Steuerventil nach Anspruch 1, dadurch gekennzeichnet, daß die Steuerkanten (20) bei jeweils zu einem Mittenschnitt ihrer umfangsmäßigen Abwicklung symmetrischen Verlauf wenigstens zweimal den vollen Öffnungsquerschnitt des Steuerkolbens (12) erreichen.

3. Steuerventil nach Anspruch 1, dadurch gekennzeichnet, daß die Steuerkanten (20) den vollen Öffnungsquerschnitt des Kolbens (12) mehrfach freigeben.

4. Steuerventil nach einem der Ansprüche 1 bis 3, dadurch gekennzeichnet, daß die Steilheit der kurvenförmigen Steuerkanten (20) der Öffnungscharakteristik des Ventils (10) angepaßt ist.

5. Steuerventil nach einem der Ansprüche 1 bis 4, dadurch gekennzeichnet, daß die Steuerflächen (19) dem Verlauf der Steuerkanten (20) folgend senkrecht zum Kolbenkern (18) angeordnet sind.

6. Steuerventil nach einem der Ansprüche 1 bis 4, dadurch gekennzeichnet, daß die Steuerflächen (19) dem Verlauf der Steuerkanten (20) folgend vom Tiefsten des kurvenförmigen Steuerkantenverlaufs einen zum Kolbenkern (IB) geneigten Verlauf nehmen.

7. Hydraulisches Steuerventil in Kolben-Schieber-Bauweise mit einem in einem Gehäuse (11) längsverschiebbar angeordneten zylindrischen Steuerkolben (12), der mittels umlaufender Ausnehmungen (17) und dadurch um einen Kolbenkern (18) an Kolbenbunden (21) gebildeter Steuerflächen (19) wenigstens einen das Gehäuse (11) durchfließenden Flüssigkeitsstrom regelt, wobei durch die Ausnehmungen (17) zwischen den Kolbenbunden (21) bei entsprechender Längsverschiebung des Steuerkolbens (12) gehäuseseitig zwischen Stegen (25) umlaufende Steuerkammern (23) gekoppelt werden, wobei die Bunde (21) des zylindrischen Steuerkolbens (12) auf ihrer parallel zu den Gehäusestegen (25) ausgebildeten Oberfläche umlaufende und die Steuerkammern (17) progressiv freigebende Steuerkanten (20) aufweisen, dadurch gekennzeichnet, daß der in Umfangsrichtung des Steuerkolbens (12) abgewickelte Verlauf der Steuerkanten (20) geradlinig ist und daß das Verlaufsbild der in Umfangsrichtung abgewickelten Kanten der Stege (25) des Gehäuses (11) bei einem sich von der den Querschnitt der Steuerkammern (23) verschließenden Stellung bis zum Erreichen von deren vollständiger Freigabe symmetrisch erweiterndem Verlauf dem Verlaufsbild einer halb-periodischen Sinusfunktion entspricht und keinen geradlinig und rechtwinklig zur Kolbenlängsachse verlaufenden Abschnitt aufweist.

## Revendications

1. Vanne de commande hydraulique de construction à piston et registre, comportant un piston de commande (12) cylindrique, coulissant longitudinalement dans un boîtier (11), qui règle au moins un courant de liquide traversant le boîtier (11), au moyen d'évidements (17) périphériques et de surfaces de commande (19), ainsi formées autour d'un noyau de piston (18) sur des épaulements de piston (21), des compartiments de commande (23) périphériques, situés du côté du boîtier, entre des cloisons (25), étant accouplés par les évidements (17), entre les épaulements de piston (21), lors du coulissement longitudinal du piston de commande (12), les épaulements (21) du piston de commande (12) cylindriques présentant, sur leur surface formée parallèlement aux cloisons de boîtier (25), des bords de commande (20) périphériques, libérant progressivement les compartiments de commande (17), caractérisée en ce que le parcours des bords de commande (20) du piston de commande (12), développé dans la direction périphérique des épaulements de piston (21), libérant ou fermant les compartiments de commande (23), côté boîtier, lors du coulissement longitudinal du piston de commande (12), correspond, pour un parcours s'élargissant symétriquement, depuis la position fermant la section transversale des compartiments de commande (23) à la position dans laquelle cette section est totalement dégagée, au parcours d'une fonction sinusoïdale semipériodique et ne présente aucune section rectiligne et perpendiculaire à l'axe longitudinal du piston.

2. Vanne de commande selon la revendication 1, caractérisée en ce que les bords de commande (20) atteignent au moins deux fois la pleine section transversale d'ouverture du piston de commande (12), pour un parcours symétrique à une coupe centrale de leur développement périphérique.

3. Vanne de commande selon la revendication 1, caractérisée en ce que les bords de commande (20) libèrent plusieurs fois la pleine section transversale d'ouverture du piston (12).

4. Vanne de commande selon l'une des revendications 1 à 3, caractérisée en ce que la pente des bords de commande (20) courbés est adaptée à la caractéristique d'ouverture de la vanne (10).

5. Vanne de commande selon l'une des revendications 1 à 4, caractérisée en ce que les surfaces de commande (19), suivant le parcours des bords de commande (20), sont disposées perpendiculairement au noyau de piston (18).

6. Vanne de commande selon l'une des revendications 1 à 4, caractérisée en ce que les surfaces de commande (19), suivant le parcours des bords de commande (20), prennent un parcours incliné par rapport au noyau de piston (18), à partir du point le plus bas du parcours courbé des bords de commande.

7. Vanne de commande hydraulique, de construction à piston et registre, comportant un piston de commande (12) cylindrique, coulissant longitudinalement dans un boîtier (11), qui règle au moins un courant de liquide traversant le boîtier (11), au moyen d'évidements (17) périphériques et de surfaces de commande (19), ainsi formées autour d'un noyau de piston (18) sur des épaulements de piston (21), des compartiments de commande (23) périphériques, situés du côté du boîtier, entre des cloisons (25), étant accouplés par les évidements (17), entre les épaulements de piston (21), lors du coulissement longitudinal du piston de commande (12), les épaulements (21) du piston de commande (12) cylindriques présentant, sur leur surface formée parallèlement aux cloisons de boîtier (25), des bords de commande (20) périphériques, libérant progressivement les compartiments de commande, caractérisée en ce que le parcours des bords de commande (20), développé dans la direction périphérique du piston de commande (12), est rectiligne et en ce que le parcours des bords des cloisons (25) du boîtier (11), développé dans la direction périphérique, correspond à une fonction sinusoïdale semipériodique, pour un parcours s'élargissant symétriquement, depuis la position fermant la section transversale des compartiments de commande (23) jusqu'à la position où cette section est totalement dégagée, et ne présente aucune section rectiligne et perpendiculaire à l'axe longitudinal du piston.

## Claims

1. Hydraulic control valve in piston-slider type of construction having a cylindrical control piston (12), arranged in a housing (11) in a longitudinally displaceable manner, which, by means of annular recesses (17) and control surfaces (19) formed in this way around a piston core (18) on piston collars (21), regulates at least one stream of liquid flowing through the housing (11), in which, through the recesses (17) between the piston collars (21) with corresponding longitudinal displacement of the control piston (12) on the housing side between lands (25), annular control chambers (23) are coupled, the collars (21) of the cylindrical control piston (12) on their surface constructed parallel to the housing lands (25) having control edges (20) which circulate and open the control chambers (17) progressively, characterized in that the course image of the control edges (20) of the control piston (12), wound off in the circumferential direction of the piston lands (21) and opening or closing the control chambers (23) on the housing side with the longitudinal displacement of the control piston (12), with a course symmetrically widening from the position closing the cross section of the control chambers (23) until reaching complete opening, corresponds to the course image of a half periodic sine function and does not have any section extending straight-lined and at right-angles to the piston longitudinal axis.

2. Control valve according to claim 1, characterized in that the control edges (20) with course in each case symmetrical to a middle section of their circumferential winding off reach at least twice the complete opening cross section of the control piston (12).

3. Control valve according to claim 1, characterized in that the control edges (20) repeatedly open the complete opening cross section of the piston (12).

4. Control valve according to one of claims 1 to 3, characterized in that the steepness of the curved control edges (20) is adapted to the opening characteristic of the valve (10).

5. Control valve according to one of claims 1 to 4, characterized in that the control surfaces (19) following the course of the control edges (20) are arranged perpendicularly to the piston core (18).

6. Control valve according to one of claims 1 to 4, characterized in that the control surfaces (19) following the course of the control edges (20) take from the deepest [point] of the curved control edge course a course inclined to the piston core (18).

7. Hydraulic control valve in piston-slider type of construction having a cylindrical control piston (12), arranged in a housing (11) in a longitudinally displaceable manner, which, by means of annular recesses (17) and control surfaces (19) formed in this way around a piston core (18) on piston collars (21), regulates at least one stream of liquid flowing through the housing (11), in which, through the recesses (17) between the piston collars (21) with corresponding longitudinal displacement of the control piston (12) on the housing side between lands (25), annular control chambers (23) are coupled, the collars (21) of the cylindrical control piston (12) on their surface constructed parallel to the housing lands (25) having control edges (20) whioh circulate and open the control chambers (17) progressively, characterized in that the course of the control edges (20) wound off in the circumferential direction of the control piston (12) is straight-lined and in that the course image of the edges of the lands (25) of the housing (11) wound off in circumferential direction, with a course symmetrically widening from the position closing the cross section of the control chambers (23) until reaching complete opening, corresponds to the course image of a half-periodic sine function and does not have any section extending straight-lined and at right-angles to the piston longitudinal axis.

Fig. 1

Fig. 2

Fig. 3